# EUROPÄISCHE PATENTANMELDUNG

(11) **EP 2 322 266 A1**
(43) Veröffentlichungstag der Anmeldung: **18.05.2011**
(21) Anmeldenummer: 09174744.4
(22) Anmeldetag: 02.11.2009
(51) Int. Cl.: B01D 53/84, B01F 5/04, F04F 5/16, F04F 5/46

(54) **Verfahren und Vorrichtung zum Entfernen von Schwefelwasserstoff aus Biogas**

(71) Anmelder: Leibniz-Institut für Agrartechnik Potsdam-Bornim e.V. (ATB), 14469 Potsdam (DE)
(72) Erfinder: Budde, Jörn, 14471, Potsdam (DE)
(74) Vertreter: Müller & Schubert

(57) **Zusammenfassung**

Die vorliegende Erfindung betrifft ein Verfahren und eine Vorrichtung zum Herstellen der Bedingungen für eine nachfolgende biologische (aerobe) Entschwefelung von Biogas, indem man Luft oder Sauerstoff mittels eines Injektors in den Biogasstrom einbringt. Der Injektor stellt eine Venturidüse dar.
Der Einsatz des erfindungsgemäßen Verfahrens und der erfindungsgemäßen Vorrichtung zum Herstellen der Bedingungen für eine nachfolgende biologische (aerobe) Entschwefelung von Biogas verbessert die Ökonomie und Ökologie einer aeroben Entschwefelung in erheblichem Maße. Selbst bei nachträglichem Einbau einer solchen Komponente und Substituierung eines vorhandenen Kompressors/Gebläses amortisiert sich der Umbau nach kurzer Zeit.

## Beschreibung

Die vorliegende Erfindung betrifft ein Verfahren und eine Vorrichtung zum Herstellen der Bedingungen für eine nachfolgende biologische (aerobe) Entschwefelung von Biogas.

Aus dem Stand der Technik sind eine Reihe von Verfahren und Vorrichtungen zum Entfernen von Schwefelwasserstoff aus Biogas bekannt. In der Regel werden dazu aerobe Schwefelbakterien genutzt. Zur Sauerstoffversorgung dieser wird dabei durch einen Kompressor oder ein Gebläse Luft in einen vorhandenen Biogas-Massenstrom eingeblasen. Derartige Anlagen haben aber den Nachteil, dass durch den funktionsbedingten Verschleiß an den beweglichen Bauteilen hohe Wartungskosten anfallen. Weiterhin ist die Anschaffung von Kompressoren oder Gebläsen sehr kostenintensiv. Auch sind im laufenden Betrieb wegen der elektrischen Antriebe der Kompressoren bzw. Gebläse hohe Energiekosten die Folge.

Der Erfindung lag daher die Aufgabe zu Grunde, ein Verfahren und eine Vorrichtung zur Einbringung von Luft oder Sauerstoff in einen vorhandenen Biogas-Massenstrom zur Erzeugung der für eine nachfolgende aerobe Entschwefelung notwendigen Bedingungen zur Verfügung zu stellen, bei denen die Nachteile des Standes der Technik beseitigt sind.

Gegenstand der Erfindung ist somit ein Verfahren und eine Vorrichtung zum Entfernen von Schwefelwasserstoff aus Biogas. Das erfindungsgemäße Verfahren zeichnet sich dadurch aus, dass man Luft oder Sauerstoff mittels eines Injektors in den Biogasstrom einbringt. In einer bevorzugten Ausführungsform des erfindungsgemäßen Verfahrens wird der Injektor als letzte bauliche Komponente vor der aeroben Entschwefelung eingesetzt.

Die erfindungsgemäße Vorrichtung zur Durchführung des Verfahrens zeichnet sich dadurch aus, dass der Injektor sich den Venturi-Effekt zunutze macht. Dieser Venturi-Effekt beruht auf dem Bernoulli-Gesetz.

In einer bevorzugten Ausführungsform ist der Injektor eine Venturidüse.

In einer weiteren bevorzugten Ausführungsform der erfindungsgemäßen Vorrichtung ist der Injektor am Saugstutzen mit einer Drossel ausgestattet. Dadurch ist es möglich, den Luftvolumenstrom den Anforderungen der aeroben Entschwefelung anzupassen.

Eine weitere bevorzugte Ausführungsform der erfindungsgemäßen Vorrichtung zeichnet sich dadurch aus, dass der Injektor am Saugstutzen mit einer Rückschlagklappe ausgestattet ist. Dadurch wird bei einem temporären Abriss des Biogas-Massenstroms ein Entweichen von Biogas verhindert.

Unter einem Injektor wird im Rahmen der vorliegenden Erfindung eine Strahlpumpe verstanden, in der die Pumpwirkung durch einen Fluidstrahl ("Treibmedium", hier Biogas) erzeugt wird, der durch Impulsaustausch ein anderes Medium ("Saugmedium", hier Luft/Sauerstoff) ansaugt, beschleunigt und verdichtet/fördert, sofern es unter ausreichendem Druck steht. Da diese Pumpenart sehr einfach aufgebaut ist und keinerlei bewegte Teile hat, ist sie besonders robust und wartungsarm.

Falls nach ATEX-Bestimmungen (Explosionsschutzbestimmungen) gefordert, sollte die Venturidüse noch mit anderen Sicherungen, wie z.B. einer Flammen-Rückschlagsicherung (Deflagrationssicherung u.Ä.), ausgestattet sein.

Leitet man Luft in den Biogasstrom ein, ist eine freie Umlüftung/Luftzufuhr zum Ansaugstutzen der Venturidüse zu gewährleisten. Es ist darauf zu achten, dass an den Bauteilen keine Senken vorhanden sind und der Lüftungsstutzen nach unten zeigt. Gegebenenfalls kann der Ansaugstutzen mit einem Gitter versehen werden, um ein Eindringen von Fremdkörpern zu verhindern. Dabei muss die drucklose bzw. druckverlustfreie Zufuhr einer den Anforderungen der aeroben Entschwefelung angepassten Menge an Luftsauerstoff gewährleistet sein.

Bei der Einleitung von Sauerstoff in den Biogasstrom muss die Einbaulage der Venturidüse an die Sauerstoff erzeugenden bzw. konzentrierenden baulichen Komponenten angepasst werden. Dabei muss die drucklose bzw. druckverlustfreie Zufuhr einer den Anforderungen der aeroben Entschwefelung angepassten Menge an Sauerstoff gewährleistet sein.

Drossel und Rückschlagklappe sollten einen möglichst geringen Druckverlust verursachen.

Der statische Druckverlust des Injektors bzw. der Venturidüse muss an die baulichen Gegebenheiten der vorliegenden Komponenten bezüglich ihres statischen Maximaldrucks angepasst sein. Die Venturidüse besteht aus säureunempfindlichem sowie witterungs- und/oder UV-beständigem Material.

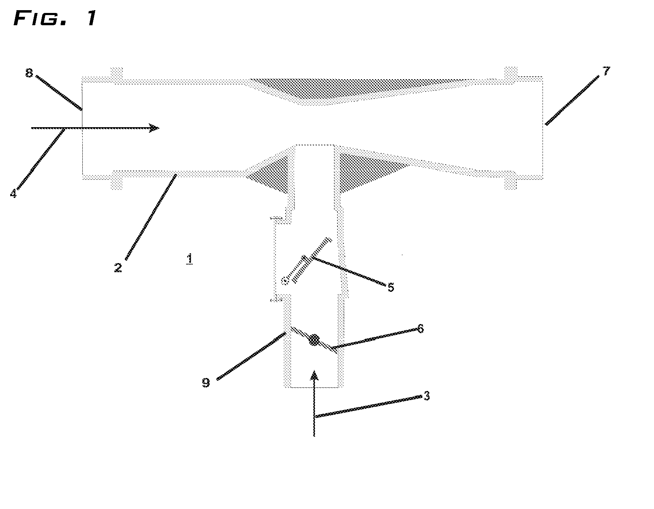

Die vorliegende Erfindung wird anhand der Fig. 1 beispielhaft erläutert.

In der Figur 1 ist der Injektor 1 dargestellt, der aus einem Rohr 2 mit einem Eintritt 8 für Biogas 4, einem gegenüberliegenden Austritt 7 und einem Saugstutzen 9 für die Luft-/Sauerstoffzufuhr 3 besteht. Der Querschnitt des Rohres 2 verjüngt sich im mittleren Teil. Im diesem Bereich mündet das Saugrohr 9 in das Rohr 2. Im Saugrohr 9 können Regel- und/oder Sicherheitsbauteile angeordnet sein. Eine Rückschlagklappe 5 verhindert das Entweichen von Biogas in die Umgebung bzw. das Eindringen von Biogas in das (Luft-/)Sauerstoffzufuhrsystem.

Mittels der Drossel 6, welche in Form einer regelbaren Drosselklappe ausgebildet sein kann, wird die Luft-/Sauerstoffzufuhr in den Biogasstrom geregelt bzw. eingestellt. Hierbei ist dem Fachmann klar, dass die Zufuhr von Luft bzw. Sauerstoff mittels der Drossel 6 gemäß den Anforderungen der aeroben Schwefelbakterien anzupassen ist. Entsprechende Regelsysteme sind dem Fachmann bekannt und können zur Steuerung des erfindungsgemäßen Verfahrens und der erfindungsgemäßen Vorrichtung verwendet oder an diese angepasst werden.

Die Figur 1 zeigt die Nutzung der dem Gas inhärenten Energie mittels der Venturidüse zur Einbringung von Luft in einen vorhandenen Biogas-Massestrom. Die dem Gas inhärente Energie wird vorher nicht durch andere technische Komponenten bereitgestellt, sondern durch die Volumenausdehnung bei Bildung des Biogases (Gärung). Die Injektoren sind funktionsbedingt wartungsfrei und haben keinen Verbrauch an elektrischer oder mechanischer Energie, da kinetische Energie und Druckänderung des Biogases verwandt werden, um Luft aus der Umgebung anzusaugen und dem Biogas beizumischen.

Der Einsatz des erfindungsgemäßen Verfahrens und der erfindungsgemäßen Vorrichtung zum Herstellen der Bedingungen für eine nachfolgende biologische (aerobe) Entschwefelung von Biogas verbessert die Ökonomie und Ökologie einer aeroben Entschwefelung in erheblichem Maße. Selbst bei nachträglichem Einbau einer solchen Komponente und Substituierung eines vorhandenen Kompressors/Gebläses amortisiert sich der Umbau nach kurzer Zeit.

### Bezugszeichenliste

- 1: Injektor
- 2: Rohr
- 3: Luft-/Sauerstoffzufuhr
- 4: Biogaszufuhr
- 5: Rückschlagklappe
- 6: Drossel
- 7: Austritt
- 8: Eintritt
- 9: Saugrohr

## Patentansprüche

1. Verfahren zum Herstellen der Bedingungen für eine nachfolgende biologische (aerobe) Entschwefelung von Biogas, **dadurch gekennzeichnet, dass** man Luft oder Sauerstoff mittels eines Injektors in den Biogasstrom einbringt.

2. Verfahren nach Anspruch 1, **dadurch gekennzeichnet, dass** der Injektor als letzte bauliche Komponente vor der aeroben Entschwefelung eingesetzt wird.

3. Vorrichtung zur Durchführung des Verfahrens nach einem der Ansprüche 1 oder 2, **dadurch gekennzeichnet, dass** der Injektor den Venturi-Effekt anwendet.

4. Vorrichtung nach Anspruch 3, **dadurch gekennzeichnet, dass** der Injektor eine Venturidüse ist.

5. Vorrichtung nach Anspruch 3, **dadurch gekennzeichnet, dass** der Injektor am Saugstutzen mit einer Drossel ausgestattet ist.

6. Vorrichtung nach Anspruch 3, **dadurch gekennzeichnet, dass** der Injektor am Saugstutzen mit einer Rückschlagklappe ausgestattet ist.

7. Vorrichtung nach einem der Ansprüche 3 bis 6, **dadurch gekennzeichnet, dass** der Injektor aus säureunempfindlichem sowie witterungs- und/oder UV-beständigem Material besteht.

8. Vorrichtung nach einem der Ansprüche 3 bis 7, **dadurch gekennzeichnet, dass** der Injektor den Bestimmungen des Explosionsschutzes entspricht.
